Europäisches Patentamt

European Patent Office

Office européen des brevets

(11) Publication number: **0 246 746**
**A1**

## EUROPEAN PATENT APPLICATION

(21) Application number: **87303243.7**

(22) Date of filing: **14.04.87**

(51) Int. Cl.³: **A 47 J 31/10**

(30) Priority: **15.05.86 US 863689**

(43) Date of publication of application:
**25.11.87 Bulletin 87/48**

(84) Designated Contracting States:
**BE DE ES FR GB IT LU NL SE**

(71) Applicant: **Black & Decker Inc.**
**Drummond Plaza Office Park 1423 Kirkwood Highway**
**Newark Delaware 19711(US)**

(72) Inventor: **Reed, Charles Arthur**
**244 River Road**
**Shelton Connecticut 06484(US)**

(74) Representative: **Lucas, Brian Ronald et al,**
**Lucas, George & Co. 135 Westhall Road**
**Warlingham Surrey CR3 9HJ(GB)**

(54) **Coffee maker.**

(57) A drip coffee maker employs a temperature-deformable element (62) to control the flow of hot water by gravity from a reservoir and heater assembly (46). A stopper (56) controlled by the temperature-deformable element (62) near the bottom of the reservoir (48) seals a hole (58) in the bottom of the reservoir until a predetermined water temperature is attained in the vicinity of the temperature-deformable element (62). A heating element (50) near the walls of the reservoir (48) heats higher layers of water in the reservoir by convection leaving the water in the vicinity of the temperature-deformable element (62) relatively cooler. When the hole (58) is unsealed, the loss of the cooler water through the hole brings hotter water from above to provide regenerative control of the temperature-deformable element (62) for positive actuation. A discontinuous embodiment employs a small reservoir and heater assembly fed cooler water by gravity from a main reservoir above; water admitted during each filling of the small reservoir and heater assembly is heated and dispensed before a fresh supply of cool water is admitted.

./...

Fig. 3

COFFEE MAKER

BACKGROUND OF THE INVENTION

The present invention relates to coffee makers and, more particularly, to coffee makers of a type in which heated water is passed through coffee grounds only once.

Coffee is conventionally brewed either by percolator or drip methods. Both methods are performed by manual and automatic coffee makers.

Bubbles produced by boiling water in the lower part of a percolator rise in a vertical tube, taking with them a discontinuous flow of hot water. The hot water is distributed over the top of a porous container holding coffee grounds. The water returns to the lower part after passing through the coffee grounds and mixes with the clean water. The resulting partially brewed coffee in the lower part is again carried up the tube for extracting additional flavor from the coffee grounds. A preferred minimum brewing time is attained by controlling the length of time that percolation continues. Some people believe that passing the same water repeatedly over the coffee grounds affects the flavor adversely because the excessively high water temperature and

2

contact time extract undesirable acids and flavor from the coffee bean. In addition the brewed coffee may tend to burn while in contact with the heater.

A drip coffee maker passes hot water through the coffee grounds a single time. For good coffee, the hot water should contact the coffee grounds for at least a predetermined minimum time. In a multi-cup coffee maker, brewing time is preferably about one minute per cup, and the total brewing time should not be less than about two or three minutes. The brewing time is controlled by relatively slow delivery of hot water to the coffee grounds.

One common type of drip coffee maker employs a hot-water generator consisting of a cold-water reservoir and a metal container to which heat is applied. A tube, having a check, or one-way, valve permits a small amount of water to flow by gravity from the reservoir to the metal container. As a portion of the water in the metal container changes to steam, a pressure develops, thus closing the check valve and forcing the water up a vertical tube from which it is distributed over the top of a perforated basket containing coffee grounds. After passing through the coffee grounds, the water is caught in a suitable container such as, for example, a decanter.

As soon as substantially all of the water in the metal container is delivered to the coffee grounds, the steam pressure remaining in the metal container is released through the vertical tube. This permits another small amount of water to flow through the check valve, again filling the metal container and beginning the process anew. This process continues

3

for as many times as required to deliver substantially all of the water from the reservoir to the coffee grounds. The amount of heat applied to the metal container is monitored by a thermostat for maintaining the metal temperature within a safe range. In some coffee makers, the heater employed in the hot water generator is also employed for keeping the coffee hot for an indefinite period after brewing is completed.

The preceding type of drip coffee maker has a number of drawbacks. The need for tubes, check valve, hot-water generator, heater, thermostat and the structure to support them, makes the apparatus relatively complex and costly. In addition, the constant thermostat cycling required to maintain the brewed coffee temperature limits the life of the thermostat. Furthermore, the pumping of hot water against gravity requires clamps or other means for maintaining safe connections.

A further type of drip coffee maker, disclosed in U.S. Patent No. 4,000,396, employs an unheated reservoir disposed over a heating pan containing a heating element. A bi-metallic strip above the heating element senses heat by radiation or air convection to unseal a valve in the bottom of the reservoir. Water from the reservoir then flows through the valve into contact with the heating element, and remains in contact with the heating element until discharged into the coffee brewing basket. This device does not respond directly to the temperature of the water delivered to the coffee grounds. Instead, it responds to the heat reaching it

4

through the air from the heating element. Thus, the temperature of the water reaching the coffee grounds may be too hot or cold. In addition, the requirement for a separate reservoir and heating pan adds complexity to the device.

A conventional manual drip coffee maker employs an open heated metal container having a high-temperature cutoff switch and a manually controlled valve. The metal container is positioned above a perforated coffee basket which is, in turn, positioned above a container for receiving the brewed coffee. Water heating is initiated by actuating the high-temperature cutoff switch. When the water in the metal container reaches a predetermined value of, for example, about 190°F (87.8°C), the high temperature cutoff switch deenergizes the heater. The manually controlled valve is opened to deliver the heated water to the coffee grounds below.

The above manual drip coffee maker, although simpler, and potentially less costly to manufacture, does not do a complete job of producing coffee. That is, manual intervention is required at an intermediate time to release the heated water into the coffee grounds. The timing of water release is important. If the water is released too early or too late, its temperature is below a value yielding the best coffee.

SUMMARY OF THE INVENTION

It is an object of the present invention to provide a liquid heating and delivery apparatus, particularly an automatic drip coffee maker, of simpler construction and improved performance.

It is a further object of the invention to provide a liquid heating and delivery apparatus, particularly an automatic drip coffee maker, having an automatic liquid dump at a predetermined water temperature.

According to the present invention there is provided a liquid heating and delivery apparatus characterized by a liquid reservoir having a liquid-delivery hole in a bottom thereof; heating means for delivering heat to said liquid reservoir whereby, in use, liquid in said reservoir experiences a temperature rise; a closure member associated with said hole, said closure member having a closed position effective for preventing liquid flow through said hole and at least one open position effective for permitting liquid flow through said hole; temperature-deformable means in said liquid reservoir for moving said closure member between said closed position and said at least one open position; and said temperature-deformable means being, in use, contacted by liquid in said liquid reservoir, whereby said closure member is moved in direct response to temperature of said liquid.

The temperature deformable means may comprise a cantilevered bimetallic strip. The closure member may be disposed at a first end of the bimetallic strip and the bimetalic strip may be secured to the liquid reservoir at a second end thereof.

The closure member may comprise a resilient skirt having a sealing flange, the sealing flange being sealingly contactable with the liquid reservoir about a perimeter of the hole in the closed position for preventing flow of liquid through the hole and being out of sealing contact with the reservoir in said at least one open position to enable liquid flow through the hole.

The closure member may include a flow-control rod extending into the hole in at least said closed position.

The flow-control rod preferably has a length sufficient to remain within the hole in said at least one open condition. This rod may have a first diameter and the hole have a second diameter, the difference between the first and second diameters being effective for controlling liquid flow rate through the hole. The flow-control rod is preferably generally cylindrical whereby said difference in diameters remains substantially constant at all positions of the stopper.

The heating means preferably comprises an electrical heater disposed external to the liquid reservoir whereby heat is delivered to the liquid through the liquid reservoir.

The electrical heater may be disposed about a perimeter of the liquid reservoir at a location elevated above a bottom of the reservoir.

Preferably, the temperature deformable means is disposed at a location approximately level with or below the heater whereby actuation of the closure member is rendered regenerative.

A high-temperature cutoff switch may be provided in thermal contact with a surface of the liquid reservoir. The high-temperature cutoff switch may be manually resettable for initiating liquid heating.

With any of the above arrangement, a second reservoir may be disposed above the liquid reservoir, the two reservoirs being separated by a partition having an opening therein. This opening is preferably small enough to inhibit free mixing of liquid between the two reservoirs. With such arrangements, the liquid reservoir can be recharged with liquid from the second reservoir for effecting multiple successive dumps of liquid through the hole in the separating partition to make multiple cups of coffee.

The above, and other objects, features and advantages of the present invention will become apparent from the following description read in conjunction with the accompanying drawings, in which like reference numerals designate the same elements.

BRIEF DESCRIPTION OF THE DRAWINGS

In the accompanying drawings:

Fig. 1 is a schematic diagram of an automatic drip coffee maker according to the prior art.

Fig. 2 is a schematic diagram of a manual drip coffee maker according to the prior art.

Fig. 3 is a cross section of a reservoir and heater assembly according to an embodiment of the invention.

Fig. 4 is a cross section taken along IV-IV in Fig. 3.

8

Fig. 5 is an enlarged cross section taken along V-V in Fig. 4 showing a stopper in its sealing position.

Fig. 6 is an enlarged cross section corresponding to that in Fig. 5 showing the stopper in its open position.

Fig. 7 is a cross section of a multi-cup embodiment of the invention.

## DETAILED DESCRIPTION OF THE PREFERRED EMBODIMENTS

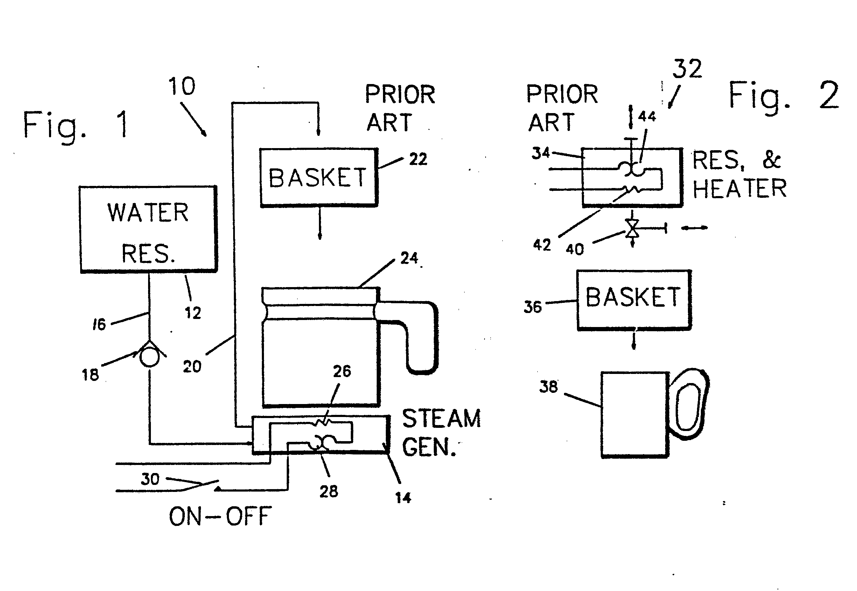

Referring to Fig. 1, there is shown, generally at 10, an automatic drip coffee maker according to the prior art. A water reservoir 12 delivers cool water to a sealed hot-water generator 14 through a tube 16 having a check valve 18 therein. A vertical tube 20 leads from hot-water generator 14 to a position above a coffee basket 22. A coffee decanter 24 may be disposed below coffee basket 22 for receiving brewed coffee. A heater 26 in thermal contact with coffee decanter 24 has sufficient heating capacity to produce steam in hot-water generator 14 for closing check valve 18 and forcing water from hot-water generator 14 through vertical tube 20 into coffee basket 22. A thermostat 28, is also disposed in thermal contact with hot-water generator 14. During brewing thermostat 28 is on substantially all the time. When brewing is completed , thermostat 28 cycles on and off as necessary to maintain the temp. of hot-water generator 14 within predetermined limits. An ON-OFF switch 30 controls energization of automatic drip coffee maker 10.

In operation, a small amount of water from water reservoir 12 passes through check valve 18, filling hot-water generator 14. When ON-OFF switch 30 is placed in the ON position, heater 26 heats the water in hot-water generator 14 until steam pressure is generated. The steam pressure closes check valve 18 and drives the water in hot-water generator 14 through vertical tube 20 into coffee basket 22. After passing through coffee grounds in coffee basket 22, the brewed coffee passes into coffee decanter 24. The embodiment shown takes advantage of heater 26 for keeping coffee decanter 24 warm after brewing. Thermostat 28 cycles open and closed as necessary to maintain the temperature of hot-water generator 14 within safe limits.

Automatic drip coffee maker 10 is relatively complex and is correspondingly costly to produce.

One skilled in the art will recognize that the particular embodiment of automatic drip coffee maker 10 is merely for descriptive purposes of one type of device in the prior art and should not be considered an exhaustive treatment of all automatic drip coffee makers.

Referring now to Fig. 2, a manual drip coffee maker according to the prior art is shown generally at 32. A reservoir 34, suitable for containing water, is disposed above a coffee basket 36 which may be, in turn located above a suitable container such as, for example, a coffee mug 38. A manual valve 40 controls the delivery of water from reservoir 34 to coffee basket 36. A heater 42, in thermal contact with reservoir 34 receives power through a manually actuated overtemperature switch 44.

Manually actuated overtemperature switch 44 is normally open and is manually closed for delivering power to heater 42. When manually actuated overtemperature switch 44 senses a predetermined maximum temperature in reservoir 34, it opens and remains open until again closed manually for the next brew. An indicator such as, for example, a light (not shown), may be provided for indicating the condition of manually actuated overtemperature switch 44. Just when manually actuated overtemperature switch 44 opens, water in reservoir 34 is at the optimum temperature for brewing coffee. This is the time manual valve 40 should be actuated to deliver the heated water to coffee basket 36. If manual valve 40 is actuated too early, the water has not reached its optimum temperature. If manual valve 40 is actuated some time after manually actuated overtemperature switch 44 opens, the water temperature has had time to decline and is again at less than its optimum value. The operator of manual drip coffee maker 32 thus must note the time at which manually actuated overtemperature switch 44 opens and actuate manual valve 40 as soon as possible thereafter.

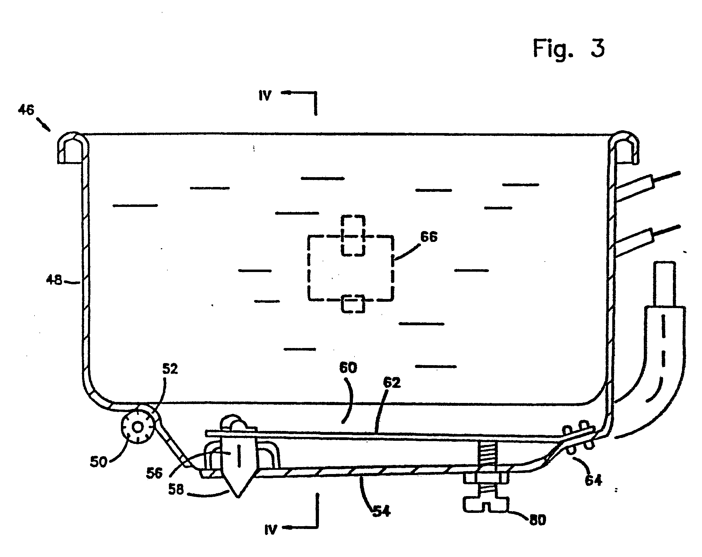

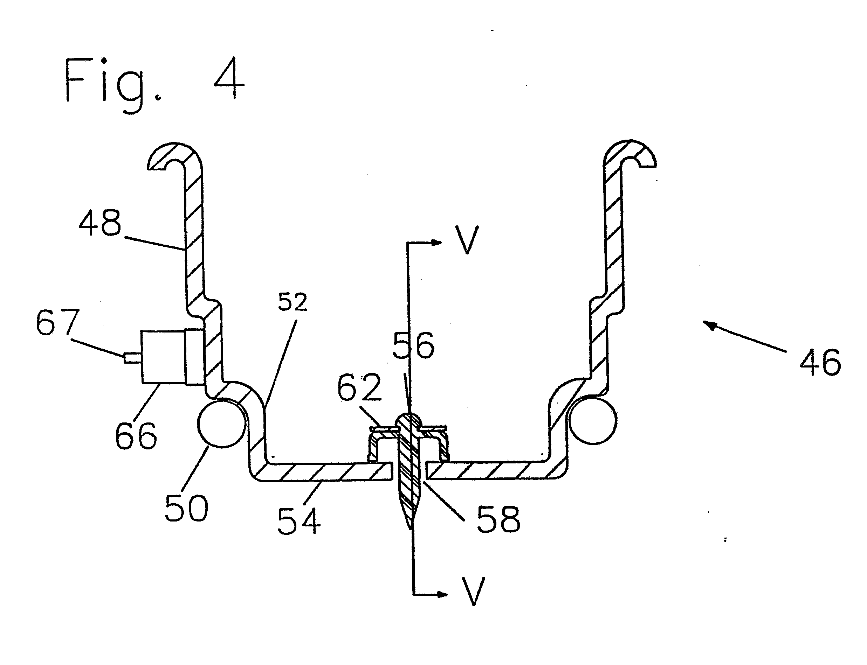

Referring now also to Figs. 3 and 4, a reservoir and heater assembly 46, according to an embodiment of the invention, is shown. Reservoir and heater assembly 46 is located in a manner similar to reservoir 34 of manual drip coffee maker 32 (Fig. 2). A metallic reservoir 48 includes an electric heater 50 in intimate thermal contact therewith.

Intimate thermal contact may be achieved, for example, by providing a groove 52 in metallic reservoir 48 having a shape fitting a radius electric heater 50. Further improved intimate thermal contact may be achieved by welding a metallic coating of electric heater 50 to metallic reservoir 48 and such is the preferred embodiment.

A bottom 54 of metallic reservoir 48 slopes downward toward a stopper 56 sealably fitting a hole 58 in bottom 54. The downward slope of bottom 54 produces a lower region 60 below the center of electric heater 50. Stopper 56 is supported at one end of a cantilevered bimetallic strip 62 whose other end is secured to metallic reservoir 48 by any convenient means such as, for example, rivets 64. A high-temperature cutoff switch 66 is disposed in thermal contact with metallic reservoir 48, preferably in physical contact with metallic reservoir 48 at a level above electric heater element 50. A switch pushbutton 67 may be manually pressed to initiate brewing.

The present invention does not require that metallic reservoir 48 and electric heater 50 be integrally formed. An embodiment of the invention in which metallic reservoir 48 and electric heater 50 are separable elements is within my contemplation. For example, metallic reservoir 48 may be similar to a pan which is removable from support on electric heater 50 for filling with water and then is replaceable for heating and brewing. Placement of metallic reservoir 48 onto electric heater 50 may also suffice to bring

12

the surface of metallic reservoir 48 into satisfactory thermal contact with high-temperature cutoff switch 66.

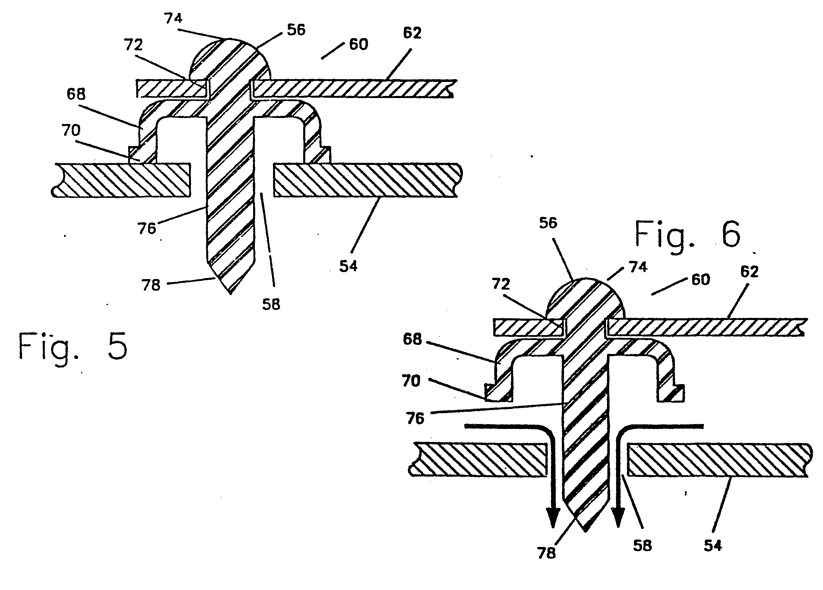

Referring now to Fig. 5, stopper 56 is shown in its sealing position. A resilient skirt 68 includes a sealing flange 70 forming an annular line of sealing contact with an upper surface of bottom 54 about hole 58. Stopper 56 is mounted in a hole 72 in cantilevered bimetallic strip 62 where it is secured by an enlarged head 74 having a diameter sufficient to overlap an upper surface of cantilevered bimetallic strip 62. A flow-control rod 76, having a diameter smaller than hole 58, extends generally centrally through hole 58. A lower end 78 of flow-control rod 76 may be tapered to guide flow-control rod 76 into hole 58.

In the condition shown in Fig. 5, water in lower region 60 is sealed therein by contact between sealing flange 70 and an upper surface of bottom 54.

Referring now to Fig. 6, cantilevered bimetallic strip 62 is deformed by contact with hot water in lower region 60, thereby raising sealing flange 70 out of contact with the surface of bottom 54. Hot water is permitted to flow through the annular gap between 76 and the perimeter of hole 58. After stopper 56 is raised a small initial amount, the water flow rate is governed by the relative diameters of flow-control rod 76 and hole 58, and not by the amount by which stopper 56 is raised beyond the small initial amount. The water flow rate can be increased by reducing the diameter of flow-control rod 76 and/or increasing the diameter of hole 58.

13

Although flow-control rod 76 is illustrated as a generally cylindrical member, other shapes may be employed. For example, flow-control rod 76 may be tapered over its length to vary the water discharge rate. This may be useful to compensate for the reduced hydrostatic head experienced as the water level in metallic reservoir 48 becomes lower. As previously noted, the water generally becomes progressively hotter from bottom to top. The hotter water raises stopper 56 further from bottom 54. Inward tapering of flow-control rod 76 increases the annular area between flow-control rod 76 and hole 58 as stopper 56 is raised and thus may maintain a constant water flow rate in the presence of a decreasing hydrostatic head.

As is well known to those skilled in the art, the deflection of a given bimetallic element is proportional to its temperature, and inversely proportional to its thickness. Thus, the temperature at which sealing flange 70 is raised out of contact with bottom 54 may be changed by changing the thickness of cantilevered bimetallic strip 62. Manual control of the opening temperature may be attained by changing a preload applied by cantilevered bimetallic strip 62 using any convenient means such as, for example, an adjustment screw 80 (Fig. 3).

Referring now also to Fig. 3, cantilevered bimetallic strip 62 applies a preload to stopper 56 in its closed condition. If stopper 56 is made of a resilient material such as, for example, silicone rubber, the preload tends to compress resilient skirt 68. As a consequence, preshaping cantilevered bimetallic strip 62 before assembly to apply a predetermined downward force on stopper 56 affects the temperature at which stopper 56 is raised sufficiently to move sealing flange 70 out of contact with bottom 54. In addition, the length of resilient skirt 68 determines the distance the end of cantilevered bimetallic strip 62 must move before sealing flange 70 loses contact with bottom 54.

The apparatus of the present invention provides regenerative control for positive actuation of stopper 56. It will be noted in Figs. 3 and 4 that electric heater 50 is near the perimeter of metallic reservoir 48 and spaced from cantilevered bimetallic strip 62. As electric heater 50 adds heat to water in metallic reservoir 48, convection carries the heat upward along the walls of metallic reservoir 48 and circulates cooler water from the top downward to lower region 60 and into contact with cantilevered bimetallic strip 62. I have discovered that the coolest water in metallic reservoir 48 is near bottom 54 and thus is in the vicinity of cantilevered bimetallic strip 62.

When the temperature of water in contact with cantilevered bimetallic strip 62 becomes high enough to open stopper 56, the cooler bottom water is released first, to be followed immediately by the substantially hotter water from above. As a consequence, almost immediately after stopper 56 is cracked open, the prompt arrival of hotter water from above rapidly opens stopper 56 to its full extent.

Once the water is released from metallic reservoir 48, the temperature of metallic reservoir

15

48 rises. High-temperature cutoff switch 66 opens and remains open to cut off power to electric heater 50 until manually reset by pressing switch pushbutton 67. A conventional auxiliary fuse (not shown) may also be provided for safety in the event that high-temperature cutoff switch 66 fails in the closed condition.

Although different settings may be used in different applications, in the preferred embodiment, high-temperature cutoff switch 66 is set to open at about 185°F (85°C) and stopper 56 is set to open between about 160-180°F (71-82°C). If manufacturing tolerances should cause high-temperature cutoff switch 66 to open before stopper 56, thermal inertia in the mass of heated material should be sufficient to continue raising the temperature of water sufficiently to open stopper 56. If an overtemperature fuse is employed, it may open at about 300°F (149°C).

The foregoing embodiment of the invention is described in the environment of a one-cup drip coffee maker. The invention is not limited to a single-cup device. Instead, a multi-cup drip coffee maker is fully contemplated within the scope of the invention. The high temperature to which metallic reservoir 48 may be subjected when electric heater 50 is actuated without water in metallic reservoir 48 suggests that a high-temperature material such as, for example, stainless steel, be employed for metallic reservoir 48. Such high-temperature materials are expensive and their fabrication is difficult. Thus, it is desirable to limit the size of a stainless steel structure and to contain a substantial part of the cold water in a plastic main reservoir.

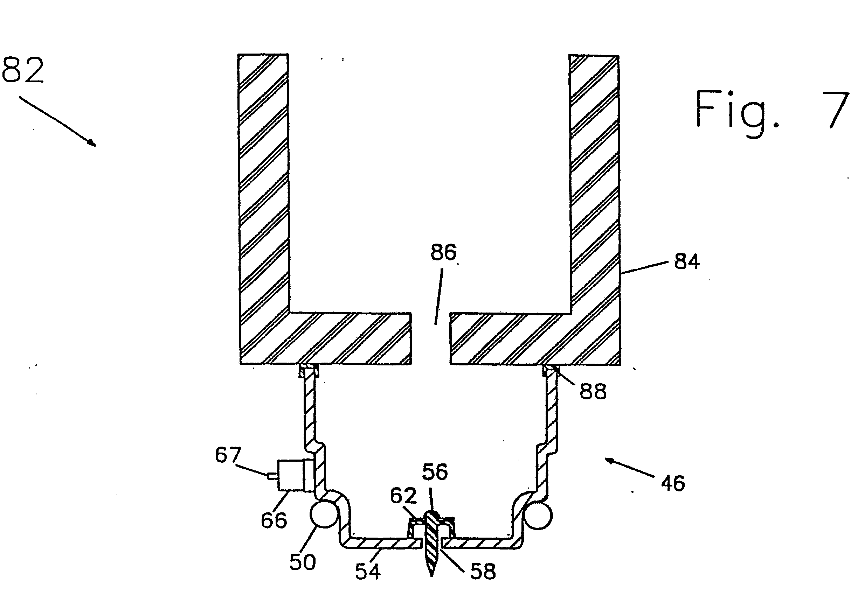

Referring now to Fig. 7, a multi-cup drip coffee maker 82 is shown according to a further embodiment of the invention. A reservoir and heater assembly 46, substantially identical to that in previously described embodiments, is disposed below a main reservoir 84 which may contain cool water. A supply opening 86 in the bottom of main reservoir 84 communicates with the interior of metallic reservoir 48. Supply opening 86 is small enough to prevent free mixing of water between main reservoir 84 and metallic reservoir 48 except by unidirectional flow from main reservoir 84 to metallic reservoir 48. A sealing ring 88, preferably of a resilient material such as, for example, silicone rubber, seals the top of metallic reservoir 48 to the bottom of main reservoir 84.

In operation, stopper 56 is initially closed and metallic reservoir 48 is filled with water from main reservoir 84. When electric heater 50 is energized, temperature stratification takes place in metallic reservoir 48 with warmer water above, and cooler water below, as described in connection with the prior embodiment. Thus, stopper 56 remains closed until water of the required temperature reaches cantilevered bimetallic strip 62. Once stopper 56 begins to open, the hotter water above rapidly moves it to its fully open condition, thus delivering hot water through hole 58. Water leaving metallic reservoir 48 permits cooler water to flow from main reservoir 84 through supply opening 86 into metallic reservoir 48. As soon as the hot water in metallic reservoir 48 is delivered through stopper 56, the cooler water entering from above contacts cantilevered bimetallic strip 62, closing stopper 56. The heating, opening, regenerating, replenishing and closing cycle then repeats until all of the water in main reservoir 84 has passed through hole 58. Thus, operation in a discontinuous mode similar to that attainable with the more complex hot water system of Fig. 1 is attained without the complexity and additional cost entailed in the prior-art device.

Although the preferred embodiments of the invention employ a cantilevered bimetallic strip 62 as a temperature-deformable element, one skilled in the art will recognize that other conventional types of materials may be employed for achieving comparable results. For example, a memory metal of a type which passes through a shape transformation at a predetermined temperature may be substituted for cantilevered bimetallic strip 62 without departing from the scope of the invention. In addition, a thermally actuated pull wire may be employed directly to move stopper 56 or to deform a cantilevered rod or strip carrying stopper 56. Stopper-actuating mechanisms without a cantilevered bar such as disclosed, for example, in U.S. Patent No. 4,227,646, may also be employed.

18

It will be appreciated that the above embodiments provide automatic drip coffee makers having a thermostatically controlled valve in thermal contact with water in a container for delivering water of a predetermined temperature to coffee grounds.

It will also be appreciated from the above that there is provided an automatic drip coffee maker having a temperature controlled valve with regenerative control of opening thereof.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

CLAIMS:

1. Liquid heating and delivery apparatus, characterized by:

a liquid reservoir (48) having a liquid-delivery hole (58) in a bottom thereof;

heating means (50) for delivering heat to said liquid reservoir (48) whereby, in use, liquid in said reservoir (48) experiences a temperature rise;

a closure member (56) associated with said hole (58), said closure member (56) having a closed position (Fig. 5) effective for preventing liquid flow through said hole (58) and at least one open position (Fig. 6) effective for permitting liquid flow through said hole (58);

temperature-deformable means (62) in said liquid reservoir (48) for moving said closure member (56) between said closed position and said at least one open position; and

said temperature-deformable means (62) being, in use, contacted by liquid in said liquid reservoir (48), whereby said closure member (56) is moved in direct response to temperature of said liquid.

2. The apparatus of Claim 1, characterized in that said temperature deformable means (62) comprises a cantilevered bimetallic strip (62), said closure member (56) being disposed at a first end of said bimetallic strip (62) and said bimetallic strip being secured to said liquid reservoir (48) at a second end thereof.

3. The apparatus of Claim 1 or 2, characterized in that said closure member (56) comprises a stopper (56).

4. The apparatus of Claim 3, characterized in that said stopper (56) includes a resilient skirt (68) having a sealing flange (70), said sealing flange (70) being sealingly contactable with said liquid reservoir (48) about a perimeter of said hole (58) in said closed position for preventing flow of liquid through said hole (58) and being out of sealing contact with said reservoir (48) in said at least one open position to enable liquid flow through said hole (58).

5. The apparatus of Claim 3 or 4, characterized in that said stopper (56) includes a flow-control rod (76) extending into said hole (58) in at least said closed position.

6. The apparatus of Claim 5, characterized in that said flow-control rod (76) has a length sufficient to remain within said hole (58) in said at least one open condition, said rod (76) having a first diameter and said hole having a second diameter, a difference between said first and second diameters being effective for controlling a liquid flow rate through said hole (58).

7. The apparatus of Claim 6, characterized in that said flow-control rod (76) is generally cylindrical whereby said difference remains substantially constant at all positions of said stopper (56).

8.    The apparatus of any preceding claim, characterized in that said heating means (50) comprises an electrical heater (50) disposed external to said liquid reservoir (48) whereby said heat is delivered to said liquid through said liquid reservoir (48).

9.    The apparatus of Claim 8, characterized in that said electrical heater (50) is disposed about a perimeter of said liquid reservoir (48) at a location elevated above a bottom of said reservoir (48).

10.    The apparatus of Claim 8 or 9, characterized in that said temperature deformable means (62) is spaced inward from said perimeter of said liquid reservoir at a location approximately level with or below said heater (50) whereby actuation of said closure member (56) is regenerative.

11.    The apparatus of Claim 8, 9 or 10, characterized in that said liquid reservoir (48) includes a groove (52), said electrical heater (50) is disposed in said groove (52), said electrical heater (50) is rigidly affixed to said liquid reservoir (48) to form a reservoir and heater assembly (46).

12.    The apparatus of any preceding claim, characterized by thermally responsive means (66) for controlling the temperature of said liquid reservoir (48).

13. The apparatus of Claim 12, characterized in that said thermally responsive means (66) comprises a high-temperature cutoff switch (66) in thermal contact with a surface of said liquid reservoir (48), said high-temperature cutoff switch (66) being manually resettable for initiating liquid heating.

14. The apparatus of any preceding claim, characterized by a second reservoir (84) disposed above, and having a larger liquid capacity than, said liquid reservoir (48), said two reservoirs (84, 48) being separated by a partition having an opening (86) therein, said opening (86) being small enough to inhibit free mixing of liquid between the two reservoirs (84, 48), whereby said liquid reservoir (48) can be recharged with liquid from said second reservoir (84) for effecting multiple, successive dumps of liquid through said hole (58), such as to make multiple cups (38) of coffee.

Fig. 1

PRIOR ART

10

BASKET — 22

WATER RES.

16

12

18

20

24

26

STEAM GEN.

30

28

14

ON—OFF

PRIOR ART

32

Fig. 2

34

44

RES. & HEATER

42  40

36 — BASKET

38

115

0246746

Fig. 3

Fig. 4

Fig. 6

Fig. 5

Fig. 7

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-2 230 304 (LOCKE)  * Whole document * | 1-4,12 -14 | A 47 J 31/10 |
| X | DE-A-2 410 620 (LEPPER)  * Whole document * | 1-3,8- 10 | |
| X | US-A-2 306 921 (WILCOX)  * Figures 1,3 * | 1-3 | |
| X | US-A-3 442 199 (McGRAIL)  * Figures 1,2 * | 1-3,8- 10 | |
| X | DE-A-2 212 283 (O & N ELECTRIC A/S)  * Figures 2,3 * | 1-3,5- 7 | TECHNICAL FIELDS SEARCHED (Int Cl 4)  A 47 J |
| X | DE-A-2 622 067 (RITTERWERK GmbH)  * Whole document * | 1-3,5- 8,14 | |
| X | US-A-2 829 583 (LEONARD)  * Whole document * | 1,3,8- 10,12- 14 | |
| | --- -/- | | |

The present search report has been drawn up for all claims

| Place of search | Date of completion of the search | Examiner |
|---|---|---|
| THE HAGUE | 17-08-1987 | SCHARTZ J. |

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | FR-A-2 072 459 (SPERRY)<br><br>* Whole document *<br><br>--- | 1,2,8-10 | |
| A | US-A-2 857 502 (SCHWANEKE)<br>* Figure 1 *<br><br>--- | 11 | |
| A | FR-A-2 287 197 (SEB S.A.)<br>* Page 3, lines 31-37; figure 1 *<br><br>--- | 12,13 | |
| D,A | US-A-4 000 396 (ABEL Jr.)<br><br>----- | | |

TECHNICAL FIELDS SEARCHED (Int Cl 4)

The present search report has been drawn up for all claims

| Place of search | Date of completion of the search | Examiner |
|---|---|---|
| THE HAGUE | 17-08-1987 | SCHARTZ J. |